# EUROPÄISCHE PATENTSCHRIFT

(11) **EP 1 589 256 B1**
(45) Veröffentlichungstag und Bekanntmachung des Hinweises auf die Patenterteilung: **09.01.2008**
(21) Anmeldenummer: 05007732.0
(22) Anmeldetag: 08.04.2005
(51) Int. Cl.: F16F 15/139

(54) **Torsionsschwingungsdämpfer**
Torsional vibration damper
Amortisseur de vibrations torsionelles

(30) Priorität: 24.04.2004 DE 102004020092
(43) Veröffentlichungstag der Anmeldung: 26.10.2005
(73) Patentinhaber: ZF FRIEDRICHSHAFEN AG, 88046 Friedrichshafen (DE)
(72) Erfinder: Kister, Igor, 97080 Würzburg (DE)

(56) Entgegenhaltungen:
- GB-A- 2 171 494
- US-A- 4 790 419
- US-A- 4 889 218

## Beschreibung

Die vorliegende Erfindung betrifft einen Torsionsschwingungsdämpfer, umfassend eine Primärseite und eine bezüglich der Primärseite gegen die Wirkung einer Dämpferelementenanordnung um eine Drehachse drehbare Sekundärseite.

Aus der DE 8504809 U1 ist ein geteiltes Schwungrad für Brennkraftmaschinen bekannt, bestehend auß einem ersten Schwungrad, welches mit der Kurbelwelle der Brennkraftmaschine verbunden ist, einem zweiten Schwungrad, welches am ersten über ein Lager verdrehbar gelagert ist, einer Torsionsdämpfereinrichtung zwischen beiden, welche zumindest aus einer Federeinrichtung mit begrenztem Federweg und einer Rutschkuppluitg besteht, die hintereinander angeordnet sind, wobei die Tor sionsdämpfer zusammen mit der Rutschkupplung als vormontiert., geschlossene Baueinheit ausgeführt ist.

Aus der DE 3720885 A1 ist eine Kupplung bekannt mit einer Schwungscheibe oder Gegendruckplatte, die drehfest mit einer ersten Welle verbindbar ist, einer Reibscheibe, die mit einer zweiten Welle verbindbar ist, einem drehfest mit der Schwungscheibe verbundenen Deckel, einer zwar drehfest mit dem Deckel verbundenen, jedoch gegenüber diesem axial bewegbaren Druckplatte und mit axial wirkenden Federmitteln, die sich an dem Deckel abstützen, und die Druckplatte zwecks Klemmung der Reibscheibe in Richtung der Schwungscheibe belasten, wobei die Schwungscheibe zwei gegeneinander gegen in Umfangsrichtung wirkende Federmittel verdrehbare Teile auf weist, nämlich ein erstes Teil, mittels welchem sie drehfest an der ersten Welle anbringbar ist und das dazu einen als Stützflansch für die Anordnung dienenden Flansch aufweist, und ein zweites Teil, gegen das die Reibscheibe axial zur Anlage bringbar ist, und das dazu eine die eigentliche Gegendruckplatte bildende Platte mit im Inneren angeordnetem Momentbegrenzer mit Reibbelägen aufweist, die axial wirken den Federmitteln ausgesetzt sind, dadurch gekennzeichnet, dass der Momentbegrenzer zwischen einerseits der eigentlichen Gegendruckplatte und andererseits einer zumindest mit dem Deckel fest verbundenen Abstützfläche eingreift, der art, dass die der Reibscheibe zugeordneten axial wirkenden Federmittel gleichzeitig selber die den Reibbelägen des Momentbegrenzers zugeordneten axialen Federmittel bilden und dass der Deckel und die Abstützfläche eine gegenüber der Schwungscheibe axial schwimmend befestigte Anordnung ist.

Weiterhin ist aus der DE 3823743 A1 eine Schwingungsdämpfer-Schwungscheibe mit zwei um eine gemeinsame Achse gegeneinander verdrehbar angeordneten Teilen bekannt, nämlich einem Eingangsteil, das mit einer treibenden Welle verbunden ist, und einem Ausgangsteil und mit Federn, die zwischen den beiden Teilen eingesetzt sind, um eine Wirkung in Umfangsrichtung zu entfalten, wobei das Ausgangsteil eine Nabe und zwei Scheiben aufweist, die einem Momentbegrenzer angehören, der zwischen zwei ringförmigen ebenen Auflagerflächen angeordnet ist, wobei die beiden Scheiben so ausgebildet sind, dass sie bezüglich des Momentbegrenzers radial außerhalb einen Abstand voneinander aufweisende Seitenscheiben bilden, in denen die Federn aufnehmende Öffnungen ausgearbeitet sind, und dass ein einziger zwischen den beiden Seitenscheiben eingesetzter und mit den Federn zusammenwirkender ringförmiger Flansch an einer Schwungmassenplatte des Eingangsteils mittels außerhalb der Federn angeordneter Montagemittel befestigt ist, dadurch gekennzeichnet, dass Reibmittel unter Einwirkung eines Federrings in Kontakt mit der zum Eingangsteil gehörenden Schwung massenplatte stehen und drehfest mit der zum Ausgangsteil gehörenden Nabe mit der Möglichkeit eines axialen Anschlagwegs bezüglich dieser angeordnet sind, wobei Haltemittel, die aus dem Federring und einem Haltering bestehen, vorgesehen sind, um den axialen Anschlagweg des Reibmittels derart zu begrenzen, dass dieses fest mit dem Teil, dem es vor dem Zusammenbau zugeordnet war, verbunden bleibt, auch nach dem Auseinanderbau der Schwingungsdämpfer-Schwungscheibe.

Bedingt durch die Weiterentwicklung im Bereich der Antriebsaggregate und die dabei erzielbaren höheren Antriebsdrehmomente derartiger Antriebsaggregate und weiterhin bedingt durch die immer kleiner werdenden für Torsionsschwingungsdämpfer in Antriebssträngen zur Verfügung stehenden Bauräume treten im Betrieb verschiedene Probleme auf. Zum einen besteht die Gefahr, dass in Nähe der Resonanzstelle eines derartigen Torsionsschwingungsdämpfers oder beim Durchlaufen dieser Resonanz bei vergleichsweise steifer Auslegung der Dämpferelemente eine zu große Relativauslenkung der Primärseite bezüglich der Sekundärseite erzeugt wird. Wird dem durch eine zu starke, gleichwohl jedoch absichtlich erzeugte Reibung zwischen Primärseite und Sekundärseite entgegengewirkt, kann es zu einer ungenügenden Entkopplung zwischen diesen beiden Bereichen des Torsionsschwingungsdämpfers im normalen Fahrbetrieb und somit einer mangelhaften Dämpfungscharakteristik kommen.

Es ist die Aufgabe der vorliegenden Erfindung, einen Torsionsschwingungsdämpfer derart weiterzubilden, dass für den gesamten Drehzahlbereich ein verbessertes Betriebsverhalten erlangt werden kann.

Erfindungsgemäß wird diese Aufgabe gelöst durch einen Torsionsschwingungsdämpfer, umfassend eine Primärseite und eine bezüglich der Primärseite gegen die Wirkung einer Dämpferelementenanordnung um eine Drehachse drehbare Sekundärseite, wobei die Primärseite oder/und die Sekundärseite in zwei durch eine Rutschkupplungsanordnung miteinander gekoppelte Bereiche unterteilt ist, und die Rutschkupplungsanordnung (60) eine Aktuatoranordnung (64) und dieser zugeordnet eine Ansteueranordnung aufweist, durch welche die Aktuatoranordnung (64) zum Verändern des Rutschmoments der Rutschkupplungsanordnung (60) ansteuerbar ist.

Durch das Vorsehen einer Rutschkupplungsanordnung im Bereich des Torsionsschwingungsdämpfers wird es möglich, bei zu großen zu übertragenden Drehmomenten bzw. zu starken Drehbeschleunigungen zwischen Primärseite und Sekundärseite durch die dann in den Rutschzustand übergehende Rutschkupplung Energie zu dissipieren und somit zur Dämpfung beizutragen und durch das Vorsehen dieser Aktuatoranordnung wird es möglich, aktiv das Verhalten der Rutschkupplungsanordnung zu beeinflussen und somit ein weiter verbessertes Verhalten des gesamten Torsionsschwingungsdämpfers in verschiedensten Betriebssituationen zu erlangen.

Aus Gründen der möglichst effizienten Schwingungsdämpfung wird vorgeschlagen, dass die Masse oder/und das Massenträgheitsmoment des ersten Bereichs wenigstens die Hälfte der Masse oder/und des Massenträgheitsmoments des zweiten Bereichs beträgt.

Gemäß einem weiteren Aspekt der vorliegenden Erfindung wird vorgeschlagen, dass die Masse oder/und das Massenträgheitsmoment des ersten Bereichs weniger als die Hälfte der Masse oder/und des Massenträgheitsmoments des zweiten Bereichs beträgt. In diesem Falle ist die Rutschkupplungsanordnung primär so ausgelegt, dass aufgrund der relativ großen Masse des ersten Bereichs der Sekundärseite ein verbessertes Entkopplungsverhalten erlangt werden kann. Alternativ ist es möglich, dass die Masse oder/und das Massenträgheitsmoment des ersten Bereichs weniger als die Hälfte der Masse oder/und des Massenträgheitsmoments des zweiten Bereichs beträgt. In diesem Falle ist also die Masse bzw. das Massenträgheitsmoment des ersten Bereichs der Sekundärseite vergleichsweise klein bzw. im theoretischen Falle gegen Null gehend. Bei dieser Auslegung ist die Rutschkupplungsanordnung insbesondere zu einer verbesserten Beherrschung beim Durchlaufen oder Annähern an die Resonanz des Torsionsschwingungsdämpfers ausgebildet.

Es kann beispielsweise vorgesehen sein, dass die Rutschkupplungsanordnung ein Krafterzeugungselement zur Bereitstellung einer Kupplungskraft aufweist, und dass durch die Aktuatoranordnung die durch das Krafterzeugungselement bereitgestellte Kupplungskraft veränderbar ist. Dabei kann die Auslegung so sein, dass das Krafterzeugungselement bezüglich einem der beiden Bereiche abgestützt ist und den anderen Bereich in einer Beaufschlagungsrichtung gegen ein Widerlager presst, das an dem einen der Bereiche getragen ist.

Wenn gemäß einem weiteren vorteilhaften Aspekt die Beaufschfagungsrichtung im Wesentlichen einer Betätigungskraftrichtung entspricht, in welcher eine mit der Sekundärseite zu koppelnde Reibungskupplung zur Durchführung von Betätigungsvorgängen zu beaufschlagen ist, dann kann sichergestellt werden, dass bei Einleitung einer Betätigungskraft in eine Reibungskupplung eine Reaktionskraft gleichzeitig auch durch das Widerlager bereitgestellt werden kann.

Gemäß einem weiteren vorteilhaften Aspekt wird vorgeschlagen, dass das Krafterzeugungselement eine unter Vorspannung gehaltene Feder umfasst und dass durch die Aktuatoranordnung die Vorspannung des Krafterzeugungselements veränderbar ist. Durch Verändern der Vorspannung einer derartigen Feder, beispielsweise einer Tellerfeder, Wellfeder o.dgl., werden dann die in der Rutschkupplungsanordnung vorhandene Kupplungslkraft und das damit in Zusammenhang stehende Kupplungsmoment bzw. Rutschmoment beeinflussbar.

Um die durch die Aktuatoranordnung aufzubringende Kraft möglichst gering halten zu können, wird weiter vorgeschlagen, dass die Aktuatoranordnung durch die Ansteueranordnung so ansteuerbar ist, dass diese auf das Krafterzeugungselement zum periodischen Verändern der Vorspannung desselben einwirkt. Durch dieses periodische Beaufschlagen des Krafterzeugungselements kann erreicht werden, dass dieses insbesondere im Bereich seiner Resonanz eine Eigenschwingung durchführt, so dass durch die Aktuatoranordnung lediglich die zum Aufbauen einer derartigen Schwingung und zum Beibehalten derselben erforderliche Kraft bereitgestellt werden muss, nicht jedoch die zum vollständigen Auslenken erforderliche Kraft.

Die Aktuatoranordnung kann beispielsweise eine Elektromagnetanordnung umfassen, welche zum Erzeugen einer die Beaufschlagungswirkung des Krafterzeugungselements beeinflussenden Magnetkraft ansteuerbar ist.

Alternativ ist es möglich, dass die Aktuatoranordnung eine Piezoelementenanordnung umfasst, welche zum Beeinflussen der Beaufschlagungswirkung des Krafterzeugungselements ansteuerbar ist.

Gemäß einem weiteren vorteilhaften Aspekt kann die Aktuatoranordnung eine magnetorheologische Flüssigkeit oder/und elektrorheologische Flüssigkeit umfassen, deren Viskosität durch Ansteuern veränderbar ist, um das Rutschmoment der Rutschkupplungsanordnung zu beeinflussen.

Die vorliegende Erfindung wird nachfolgend mit Bezug auf die beiliegenden Zeichnungen detailliert beschrieben. Es zeigt:
- Fig. 1: eine Teil-Längsschnittansicht eines erfindungsgemäßen Torsionsschwingungsdämpfers;
- Fig. 2: ein Weg-Kraft-Diagramm eines Krafterzeugungselements;
- Fig. 3: eine der Fig. 1 entsprechende Ansicht einer alternativen Ausgestaltungsform;
- Fig. 4: eine der Fig. 1 entsprechende Ansicht einer alternativen Ausgestaltungsform;
- Fig. 5: eine Abwandlung der in Fig. 4 gezeigten Anordnung;
- Fig. 6: eine der Fig. 1 entsprechende Ansicht einer alternativen Ausgestaltungsform;
- Fig. 7: eine der Fig. 1 entsprechende Ansicht einer alternativen Ausgestaltungsform;
- Fig. 8: eine Ausgestaltungsvariante eines bei dem System der Fig. 7 eingesetzten Druckrings;
- Fig. 9: eine der Fig. 8 entsprechende Ansicht im Schnitt;
- Fig. 10: eine weitere der Fig. 1 entsprechende Ansicht einer alternativen Ausgestaltungsart eines Torsionsschwingungsdämpfers;
- Fig. 11: eine Schnittansicht eines Nabenbereichs der Sekundärseite des in Fig. 10 gezeigten Torsionsschwingungsdämpfers;
- Fig. 12: eine weitere der Fig. 1 entsprechende Ansicht einer alternativen Ausgestaltungsart des erfindungsgemäßen Torsionsschwingungsdämpfers;
- Fig. 13: eine weitere der Fig. 1 entsprechende Ansicht einer alternativen Ausgestaltungsart des erfindungsgemäßen Torsionsschwingungsdämpfers;
- Fig. 14: eine weitere der Fig. 1 entsprechende Ansicht einer alternativen Ausgestaltungsart des erfindungsgemäßen Torsionsschwingungsdämpfers;
- Fig. 15: eine weitere der Fig. 1 entsprechende Ansicht einer alternativen Ausgestaltungsart des erfindungsgemäßen Torsionsschwingungsdämpfers.

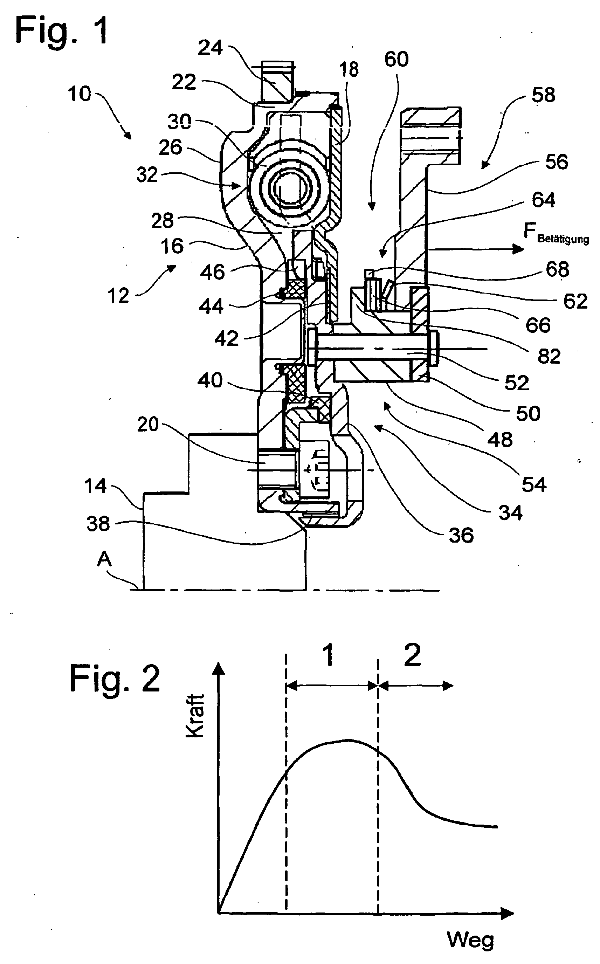

In Fig. 1 ist eine erste Ausgestaltungsvariante eines erfindungsgemäßen Torsionsschwingungsdämpfers 10 dargestellt. Es sei darauf hingewiesen, dass der grundsätzliche Aufbau des Torsionsschwingungsdämpfers, wie er in Fig. 1 erkennbar ist und nachfolgend detailliert beschrieben wird, bei allen nachfolgenden Ausgestaltungsvarianten gleich ist bzw. sein kann und daher nur mit Bezug auf die Fig. 1 beschrieben wird. Es sei weiter darauf hingewiesen, dass selbstverständlich im Bereich des Torsionsschwingungsdämpfers selbst verschiedenste Variationen vorgenommen werden können, ohne von den Prinzipien der vorliegenden Erfindung abzuweichen.

Der Torsionsschwingungsdämpfer 10 umfasst eine Primärseite 12, die mit einer Antriebswelle 14, beispielsweise einer Kurbelwelle einer Brennkraftmaschine, zur gemeinsamen Drehung um eine Drehachse A verbunden werden kann. Die Primärseite 12 umfasst zwei Deckscheibenelemente 16, 18. Das Deckscheibenelement 16 ist radial innen durch Schraubbolzen 20 an die Antriebswelle 14 anzubinden. Ein radial äußerer und näherungsweise axial sich erstreckender Abschnitt 22 des Deckscheibenelements 16 trägt einen Anlasserzahnkranz 24 und trägt weiterhin in axialem Abstand zu dem näherungsweise radial sich erstreckenden Abschnitt 26 des Deckscheibenelements 16 das zweite Deckscheibenelement 18. Von dem Deckscheibenelement 16 und dem Deckscheibenelement 18 ist ein Volumen 28 begrenzt, in welchem beispielsweise ein viskoses Medium angeordnet ist und weiterhin die beispielsweise als Schraubendruckfedern ausgestalteten Dämpferelemente 30 einer Dämpferelementenanordnung 32 vorgesehen sind.

Eine Sekundärseite 34 des Torsionsschwingungsdämpfers 10 umfasst ein Zentralscheibenelement 36, das radial außen zwischen die beiden Deckscheibenelemente 16, 18 und in den Volumenbereich 28 eingreift und somit ebenso wie die Deckscheibenelemente 16, 18 Abstützbereiche bereitstellt, über welche vermittels der Dämpferelemente 30 die Primärseite 12 und die Sekundärseite 34 zur Drehmomentübertragung gekoppelt sind.

Radial innen ist das Zentralscheibenelement 36 über ein Radiallager 38 und ein Axiallager 40 bezüglich der Primärseite 12 axial und radial abgestützt, wobei durch eine zwischen dem Zentralscheibenelement 36 und dem Deckscheibenelement 18 wirkende Vorspannfeder 42, beispielsweise Tellerfeder, ein fester Anlagekontakt zum Axiallager 40 vorhanden ist.

Am Deckscheibenelement 16 sind ferner mehrere Planetenräder 44 drehbar getragen, die mit einem am Zentralscheibenelement 36 ausgebildeten Hohlradabschnitt 46 in Kämmeingriff stehen und somit bei Relativdrehung zwischen Primärseite 12 und Sekundärseite 34 zur Drehung angetrieben werden.

Die Sekundärseite 34 umfasst ferner ein ringartig ausgestaltetes Nabenelement 48, das zusammen mit einem nachfolgend noch beschriebenen Widerlagerring 50 vermittels mehrerer Bolzenelemente 52, beispielsweise Nietbolzen, mit dem Zentralscheibenelement 36 radial innerhalb des Deckscheibenelements 18 der Primärseite 12 fest verbunden ist. Das Zentralscheibenelement 36, das ringartige Nabenelement 48 und der Widerlagerring 50 bilden die wesentlichen Bestandteile eines ersten Bereichs 54 der Sekundärseite 34. Dieser erste Bereich 54 stellt mit dem Zentralscheibenelement 36 auch denjenigen Bereich bereit, mit welchem die Sekundärseite 34 in Wechselwirkung mit der Dämpferelementenanordnung 32 ist.

Die Sekundärseite 34 umfasst ferner eine ringartige Schwungmasse 56. Diese kann bei Integration in den Antriebsstrang eines Kraftfahrzeugs gleichzeitig das Widerlager für eine nicht dargestellte Druckplattenbaugruppe bzw. Reibungskupplung bilden. Die Schwungmasse 56 ist an dem ringartigen Nabenelement 48 konzentrisch zur Drehachse A getragen, ist jedoch grundsätzlich bezüglich des ringartigen Nabenelements 48 drehbar. Die Schwungmasse 56 bildet somit im Wesentlichen einen zweiten Bereich 58 der Sekundärseite 34.

Um über den Torsionsschwingungsdämpfer 10 ein Drehmoment übertragen zu können, ist es erforderlich, eine Kopplung zwischen dem ersten Bereich 54 und dem zweiten Bereich 58 der Sekundärseite 34 herzustellen. Dies erfolgt vermittels einer allgemein mit 60 bezeichneten Rutschkupplungsanordnung. Diese Rutschkupplungsanordnung generiert zwischen den beiden Bereichen 54 und 58 ein Rutschmoment und gestattet somit die Drehmomentübertragung.

Die Rutschkupplung 60 umfasst im dargestellten Falle ein beispielsweise als Tellerfeder ausgestaltetes Krafterzeugungselement 62. Dieses stützt sich einerseits an der Schwungmasse 56, also am zweiten Bereich 58 der Sekundärseite 34, ab und presst diesen somit axial gegen den Widerlagerring 50, der wiederum Teil des ersten Bereichs 54 ist. Andererseits stützt sich das Krafterzeugungsetement 62 über eine Aktuatoranordnung 64 an einem Radialvorsprung 82 des Nabenelements 48 ab. Somit wird die Reaktionskraft der Rutschkupplung 60 bzw. des Krafterzeugungselements 62 derselben vollständig innerhalb der Sekundärseite 34 aufgenommen und es entstehen keine nach außen gerichteten Kräfte.

Man erkennt in Fig. 1 weiter, dass durch das Krafterzeugungselement 64 der zweite Bereich 58 der Sekundärseite 34 grundsätzlich in einer Richtung bezüglich des ersten Bereichs 54 beaufschlagt ist, die einer Kraftrichtung entspricht, mit welcher dieser zweite Bereich 58 durch Einleiten einer Kupplungsbetätigungskraft F_{Betätigung} bei Durchführen von Betätigungsvorgängen beaufschlagt wird. Diese Betätigungskraftrichtung liegt beispielsweise dann vor, wenn eine Reibungskupplung des gezogenen Typs vorhanden ist, bei welcher die zum Ausrücken erforderliche Betätigungskraft oder ggf. auch die zum Einrücken erforderliche Betätigungskraft eben in Richtung von dem Torsionsschwingungsdämpfer 10 weg erzeugt wird. Die Folge davon ist, dass das Einleiten einer Betätigungskraft die axiale Lage des zweiten Bereichs 58 und somit auch die axiale Lage der gesamten Reibungskupplung nicht beeinträchtigt und weiterhin auch nicht die Vorspannung des Krafterzeugungselements 62 beeinträchtigt. Gleichwohl wird bei Einleitung einer derartigen Betätigungskraft der Anpressdruck des zweiten Bereichs 58 gegen den Widerlagerring 50 verstärkt werden und dort eine erhöhte Reibkraft erzeugt werden mit der Folge, dass auch das Rutschmoment der Rutschkupplungsanordnung 60 entsprechend ansteigen wird.

Die Aktuatoranordnung 64 umfasst bei der in Fig. 1 dargestellten Variante eine Piezoelementenanordnung 66. Diese kann über einen Schleifring 68 mit elektrischer Energie versorgt werden. Eine Erregung bzw. eine Ansteuerung vermittels einer nicht weiter dargestellten Ansteuervorrichtung hat zur Folge, dass die Piezoelementenanordnung 66 ihre axiale Ausdehnung - axial bezogen auf die Drehachse A - verändert. Dies wiederum bewirkt, dass die Einbaulage des Krafterzeugungselements 62 und somit auch dessen Vorspannung entsprechend verändert werden. Dehnt sich die Piezoelementenanordnung 66 in axialer Richtung aus, wird das Krafterzeugungselement 62 komprimiert und erzeugt eine entsprechend größere Kupplungskraft. Zieht sich die Piezoelementenanordnung 66 in axialer Richtung zusammen, wird das Krafterzeugungselement 62 entspannt und die Erzeugung einer geringeren Kupplungskraft ist die Folge.

Der Zusammenhang zwischen diesem Verstellweg bzw. der damit einhergehenden Einbaulage des Krafterzeugungselements 62 und der durch dieses bereitgestellten Kupplungskraft ist in Fig. 2 dargestellt. Man erkennt, dass in einem Weg- bzw. Kompressionsbereich 1 das Krafterzeugungselement 62 eine maximale Kraft bereitstellt. Bei zunehmender Entspannung, also abnehmendem Weg in der Figur 2, nimmt die Kraft ab. Ebenso nimmt beim Übergang in einen Bereich 2 bei zunehmender Kompression die Kraft ab.

Durch definiertes Ansteuern der Aktuatoranordnung 64 kann nun unter Berücksichtigung des in Fig. 2 gezeigten Zusammenhangs das in der Rutschkupplungsanordnung 60 bereitgestellte Rutschmoment aktiv beeinflusst werden. Durch Erhöhen der Kompression und damit in einem gewissen Bereich auch Erhöhen der Kupplungskraft kann das Kupplungsmoment erhöht werden, so dass auch die beiden Bereiche 54 und 58 stärker miteinander gekoppelt sind. Die Folge davon ist, dass zum Auslösen der Rutschkupplung 60 höhere zu übertragende Drehmomente erforderlich sind oder höhere Drehbeschleunigungen erforderlich sind. Das Mindern der Kraft hat entsprechend eine schwächere Kopplung zwischen den beiden Bereichen 54 und 58 zur Folge. Die Folge davon ist, dass bereits bei geringeren zu übertragenden Drehmomenten bzw. geringeren Winkelbeschleunigungen die Rutschkupplung ausgelöst wird. Dies ist vor allem dann vorteilhaft, wenn die Resonanzfrequenz des Torsionsschwingungsdämpfers 10 durchlaufen wird und somit Resonanzüberhöhungen durch Energiedissipierung im Bereich der Rutschkupplungsanordnung 60 vermieden werden. Eine möglichst starre Kopplung zwischen den beiden Bereichen 54 und 58 kann dann insbesondere im normalen Betriebsbereich vorteilhaft sein, wobei jedoch auch dann beispielsweise spontan auftretende Lastwechselschwingungen, die auch zu Schwingungsüberhöhungen und sehr starken Winkelbeschleunigungen führen können, zusätzlich im Bereich der Rutschkupplungsanordnung 60 abgefangen werden können.

Um bei einer derartigen Anordnung die durch die Aktuatoranordnung 64 aufzubringende Kraft bzw. Energie möglichst gering zu halten, ist es beispielsweise möglich, diese nicht konstant zur Beeinflussung der Vorspannung anzusteuern, sondern oszillierend bzw. periodisch. Die Folge davon ist eine entsprechend periodische Veränderung der Einbaulage des Krafterzeugungselements 62, so dass dies aufgrund seiner Federcharakteristik auch zur Schwingung angeregt werden kann. Je näher die Frequenz dieser Anregung im Bereich der Resonanzfrequenz des Krafterzeugungselements 62 liegt, desto stärker wird dieses schwingen und dabei beispielsweise zwischen den Bereichen 1 und 2 in der Fig. 2 hin und her oszillieren. Die Folge davon ist, dass bei an sich durch Ansteuerung der Aktuatoranordnung 64 noch nicht erreichtem Weg bzw. Bereich 2 in Fig. 2 durch Schwingungsanregung tatsächlich verstärkt dieser Bereich 2 vorliegt und somit eine Absenkung der mittleren wirkenden Kupplungskraft und entsprechend eine Absenkung des mittleren bzw. effektiven Rutschmoments erreicht werden kann.

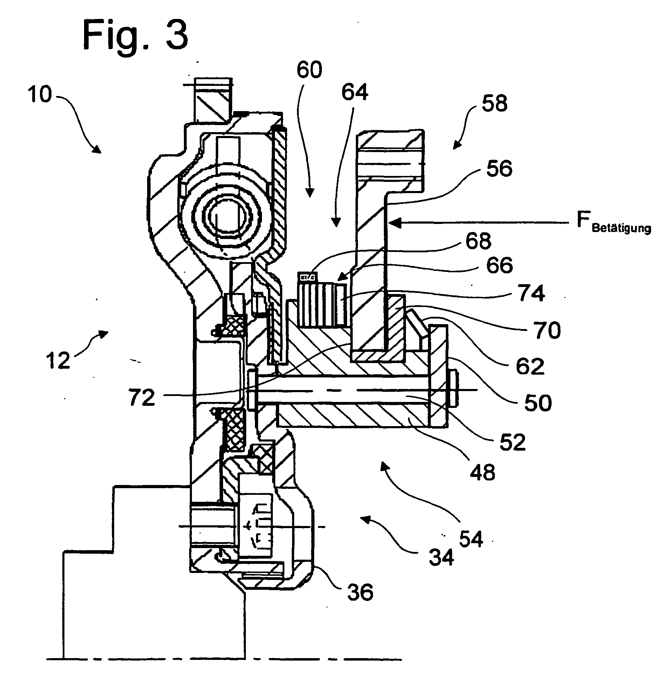

In Fig. 3 ist eine alternative Ausgestaltungsart des erfindungsgemäßen Torsionsschwingungsdämpfers 10 gezeigt. Die Änderungen bezüglich der Fig. 1 beziehen sich primär auf die Rutschkupplungsanordnung 60 und die damit in Zusammenhang stehenden Komponenten. Ansonsten entspricht der grundsätzliche Aufbau des Torsionsschwingungsdämpfers 10 dem vorangehend beschriebenen Aufbau.

Man erkennt, dass das Kraftbeaufschlagungselement 62 am ersten Bereich 54 der Sekundärseite 34 über den Widerlagerring 50 abgestützt ist und den zweiten Bereich 58 über einen im Schnitt L-förmigen Druckring 70 beaufschlagt. Die Anordnung kann so sein, dass durch die Krafteinwirkung des Krafterzeugungselements der radial innen auch durch den L-förmigen Druckring 70 gelagerte zweite Bereich 58 gegen einen Radialvorsprung 72 des Nabenelements 48 gepresst wird. Die Aktuatoranordnung 64, hier beispielsweise wieder umfassend eine Piezoelementenanordnung 66, beaufschlagt von der anderen axialen Seite her den zweiten Bereich 58, beispielsweise über einen Druckring 74. Durch Abstützen des Druckrings 74 bezüglich des Nabenelements 48 über die Aktuatoranordnung 64 einerseits und Pressen desselben gegen die Schwungmasse 56 andererseits kann eine zusätzliche Kraftkomponente erzeugt werden, die eine definierte Veränderung des Rutschmoments bereitstellt. Ist, wie vorangehend bereits ausgeführt, die Ausgestaltung so, dass durch das Krafterzeugungselement 62 die Schwungmasse 56 gegen den Radialvorsprung 72 gepresst ist, so kann diesem vorhandenen Grundzustand, der ein bestimmtes Grund-Rutschmoment bereitstellt, ein zusätzliches durch Aktuatorbetätigung erzeugbares und entsprechend modulierbares Rutschmoment überlagert werden. Ist beispielsweise weiter die Ausgestaltung so, dass durch den Druckring 74 ein vergleichsweise geringes Reibmoment bereitgestellt wird, so kann durch Pressen desselben gegen die Schwungmasse 56 und damit Entlasten des Reibkontakts derselben zum Radialvorsprung 72 sogar eine Minderung des Rutschmoments im Vergleich zu dem angesprochenen Grund-Rutschmoment erzielt werden. Grundsätzlich ist es aber auch denkbar, dass durch entsprechende Ausgestaltung des Druckrings 70 dafür gesorgt ist, dass die Beaufschlagungswirkung des Krafterzeugungselements 62 die Schwungmasse 56 nicht gegen den Radialvorsprung 72 pressen kann. Erst dann, wenn durch entsprechende Aktuatoransteuerung die Piezoelementenanordnung 66 den Druckring 74 gegen die Schwungmasse 56 presst, wird auch unter Ausnutzung der durch das Kratterzeugungselement 62 dann bereltgestellten Reaktionskraft definiert ein Rutschmoment eingestellt. Ansonsten wäre bei dieser Variante bei nicht erregter Aktuatoranordnung 64 grundsätzlich eine Entkopplung zwischen den Bereichen 54 und 58 vorhanden.

Wie bereits ausgeführt, ist es auch hier möglich, eine oszillierende Aktivierung der Aktuatoranordnung 64 und entsprechend oszillierende Beaufschlagung der Schwungmasse 56 mit dem Druckring 74 zu erzeugen, so dass auch die vorangehend mit Bezug auf die Fig. 1 beschriebenen Effekte bei der Variation des Rutschmoments erzielt werden können.

Weiter sei darauf hingewiesen, dass bei dieser Ausgestaltungsform, ebenso wie bei der vorangehend beschriebenen Ausgestaltungsform, vorgesehen sein kann, dass durch entsprechende Erregung der Aktuatoranordnung 64 die Beaufschlagungswirkung nicht verstärkt, sondern gemindert wird, d.h. bei der Ausgestaltungsform gemäß Fig. 3 der Druckring 74 definiert von dem zweiten Bereich 58 weggezogen wird und dadurch entsprechend das Rutschmoment beeinflusst wird.

In Fig. 3 erkennt man weiter, dass die Ausgestaltung dort so ist, dass bei nunmehr auf den Torsionsschwingungsdämpfer zu gerichteter Betätigungskraft einer Reibungskupplung eine definierte Abstützung des zweiten Bereichs 58, also der Schwungmasse 56, in axialer Richtung erlangt wird, nämlich an dem Radialvorsprung 72. Somit kann auch hier dafür gesorgt werden, dass die Erzeugung einer Kupplungsbetätigungskraft keinen Einfluss auf die Axiallage des zweiten Bereichs 58 hat, wenn gleichwohl auch hier bei Erzeugung einer Betätigungskraft ein verstärkter Kontakt zwischen dem zweiten Bereich 58 und dem Nabenelement 48 vorhanden sein wird und dementsprechend auch das Rutschmoment der Rutschkupplungsanordnung 60 beeinflusst sein wird. Ist eine derartige Beeinflussung des Rutschmoments nicht gewünscht, so kann, selbstverständlich auch bei allen anderen Augestaltungsvarianten, dies durch entsprechende Ansteuerung der Aktuatorenordnung 64 während der Erzeugung der Kupplungsbetätigungskraft kompensiert werden.

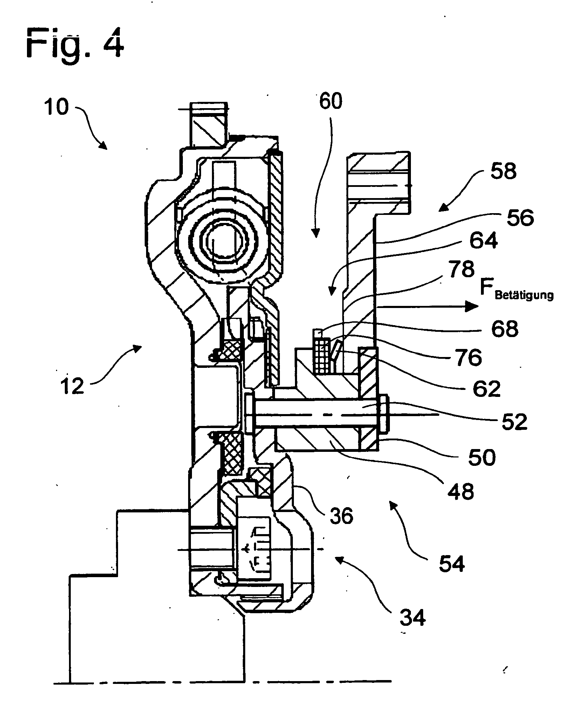

In Fig. 4 ist eine weitere Abwandlung des erfindungsgemäßen Torsionsschwingungsdämpfers 10 gezeigt. Bei dieser Ausgestaltungsvariante, die weitgehend der in Fig. 1 dargestellten Ausgestaltungsvariante entspricht, umfasst die Aktuatoranordnung 64 eine Elektromagnetanordnung 76. Diese ist beispielsweise das Nabenelement 48 ringartig umgebend angeordnet und kann, wie bekannt, eine Mehrzahl von Wicklungen oder Windungen auf einem Jochbereich umfassen. Die Kontaktierung erfolgt beispielsweise wieder über den Schleifring 68. Das Kraftbeaufschlagungselement 62 stützt sich an dieser Elektromagnetanordnung 76 einerseits und der Schwungmasse 56 andererseits ab. Um hier eine elektromagnetische Entkopplung zur Schwungmasse 56 sicherzustellen, kann an deren von dem Kraftbeaufschlagungselement 62 beaufschlagten Seite ein Dielektrikum 78 vorgesehen sein.

Die elektrische Erregung der Elektromagnetanordnung 76 hat zur Folge, dass das im Allgemeinen aus magnetisierbarem Material aufgebaute Krafterzeugungselement 62 verstärkt gegen diese gezogen wird und somit seine Vorspannwirkung mindert. Eine verstärkte Entkopplung zwischen den beiden Bereichen 54 und 58 ist die Folge. Auch hier kann, wie vorangehend beschrieben, oszillierend gearbeitet werden, um somit durch Einstellung eines dann geminderten mittleren Rutschmoments eine entsprechende Entkopplungswirkung zwischen den beiden Bereichen 54 und 58 erlangen zu können.

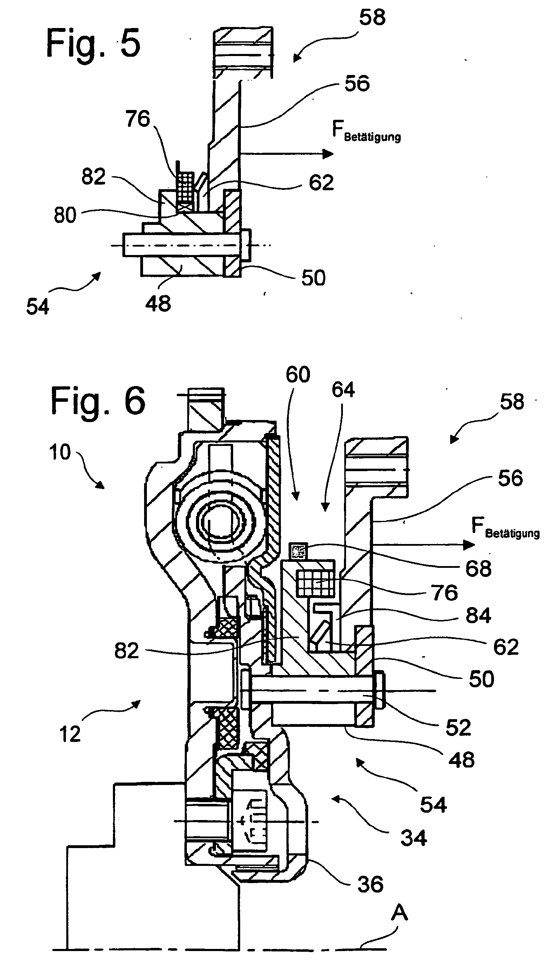

Bei der in Fig. 5 dargestellten Abwandlung dieser Ausgestaltungsvariante ist die Elektromagnetanordnung 76 nicht direkt auf dem ringartigen Nabenelement getragen. Vielmehr ist eine Lagerungsanordnung 80 vorhanden, beispielsweise in Form einer Wälzkörperlagerung. Ist beispielsweise auch die Abstützung an dem Radialvorsprung 82 des Nabenelements 48 in reibungsmindernder Art und Weise, beispielsweise unter Einsatz eines Gleitlagerrings o.dgl., vorgesehen, so wird primär das Rutschmoment durch reibende Anlage der Schwungmasse 56 am Widerlagerring 50 erfolgen.

Ein weiterer erfindungsgemäßer Torsionsschwingungsdämpfer 10 ist in Fig. 6 gezeigt. Hier umfasst die Aktuatoranordnung 64 der Rutschkupplungsanordnung 60 wieder eine Elektromagnetanordnung 76. Der Radialvorsprung 82 des Nabenelements 48 greift hier weiter nach radial außen, so dass die Elektromagnetanordnung 76 derart dimensioniert ist, dass sie einen mit L-artigem Querschnitt ausgestalteten Druckring 84 radial außen umgibt. Das Krafterzeugungselement 62 stützt sich an dem Radialvorsprung 82 einerseits und am Druckring 84 andererseits ab und presst diesen gegen den zweiten Bereich 58 und somit den zweiten Bereich 58 gegen den Widerlagerring 50. Durch Erregung der Elektromagnetanordnung 76 wird der aus beliebigem ferromagnetischem Material, beispielsweise Stahl o.dgl., aufgebaute Druckring 84 verstärkt in den von der Elektromagnetanordnung 76 umgebenen Volumenbereich gezogen, so dass die durch das Kraftelement 62 bereitgestellte Kupplungskraft beeinflusst werden kann. Insbesondere bedeutet hier ein Wegziehen des Druckrings 84 und eine damit einhergehende zunehmende Kompression des Kraftbeaufschlagungselements 62 eine verminderte Weiterleitung dieser Kraft in Richtung zur Schwungmasse 56 und dementsprechend eine Abnahme des Kupplungsmoments. Auch hier kann selbstverständlich in modulierter Art und Weise gearbeitet werden. Insbesondere ist es möglich, durch vollständiges Abziehen des Druckrings 84 von der Schwungmasse 56 eine im Wesentlichen vollständige Entkopplung zwischen den beiden Bereichen 54 und 58 der Sekundärseite 34 zu erlangen.

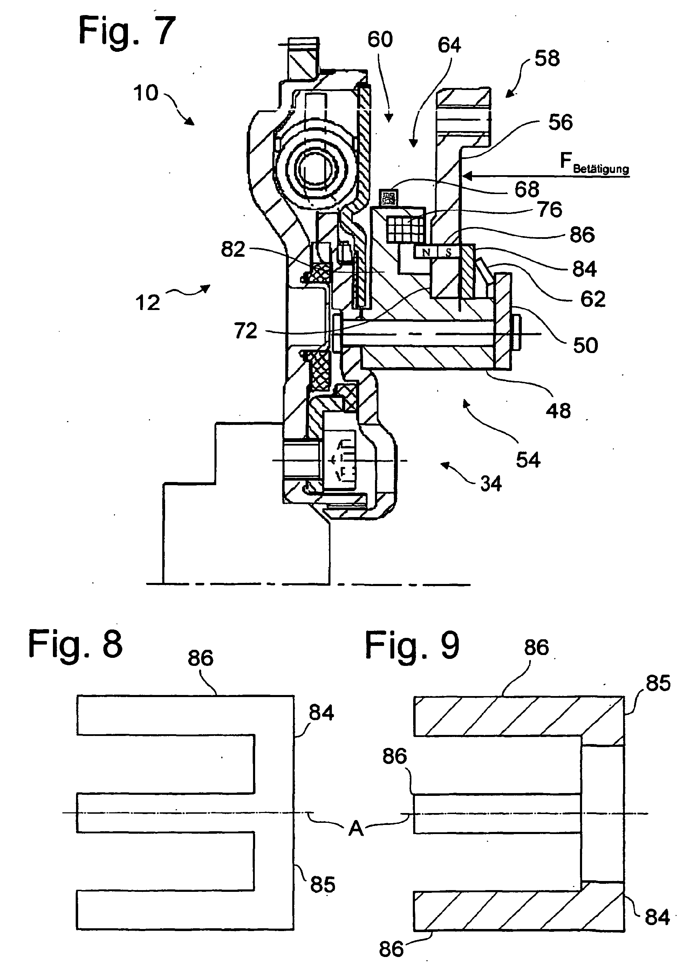

Bei dem in Fig. 7 dargestellten Torsionsschwingungsdämpfer 10 ist der Druckring 84 zusammen mit dem Krafterzeugungselement 62 an der anderen axialen Seite der Schwungmasse 56 angeordnet, so dass durch das sich grundsätzlich am Widerlager 50 abstützende Kraftbeaufschlagungselement 62 und den Druckring 84 die Schwungmasse 56 wiederum gegen den Radialvorsprung 72 an dem Nabenelement 48 gepresst ist.

Der Druckring durchgreift mit einem oder mehreren Stegabschnitten 86 die Schwungmasse 56 und reicht mit diesen Stegabschnitten bis in den von der Elektromagnetanordnung 76 umgebenen Volumenbereich. Die Stegabschnitte 86 sind magnetisiert und können, wie in der Fig. 7 angedeutet, als Permanentmagnete ausgebildet sein. Durch die bei Erregung der Elektromagnetanordnung 76 dann erzeugte Wechselwirkung kann definiert eine den Druckring 84 axial beaufschlagende Krafteinwirkung erzeugt werden und dieser somit beispielsweise entgegen der Krafteinwirkung des Krafterzeugungselements 62 beaufschlagt und verschoben werden, um das Rutschmoment zu mindern. Auch eine Beaufschlagung in entgegengesetzter Richtung zur Unterstützung der Krafteinwirkung des Krafterzeugungselements ist grundsätzlich möglich.

Es sei weiter darauf hingewiesen, dass der Druckring 84 bzw. die Stegabschnitte 86 aus diamagnetischem Material, wie z.B. Kupfer, ausgeführt sein könnten.

Die Fig. 8 und 9 zeigen den Druckring 84. Der Druckring 84 umfasst einen ringartigen Körperbereich 85, auf welchen auch das Krafterzeugungselement 62 einwirkt. Von diesem Körperbereich 85 gehen in beispielsweise gleichen Umfangsabständen zueinander die Stegabschnitte 86 aus, welche entsprechende Öffnungen in dem zweiten Bereich 58, also der Schwungmasse 86 durchgreifen und somit in Wechselwirkung mit der Elektromagnetanordnung 76 gelangen können.

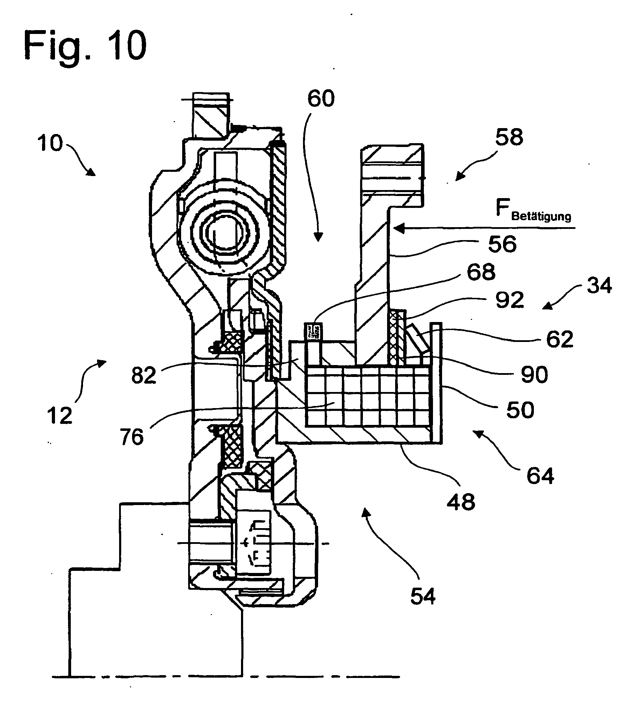

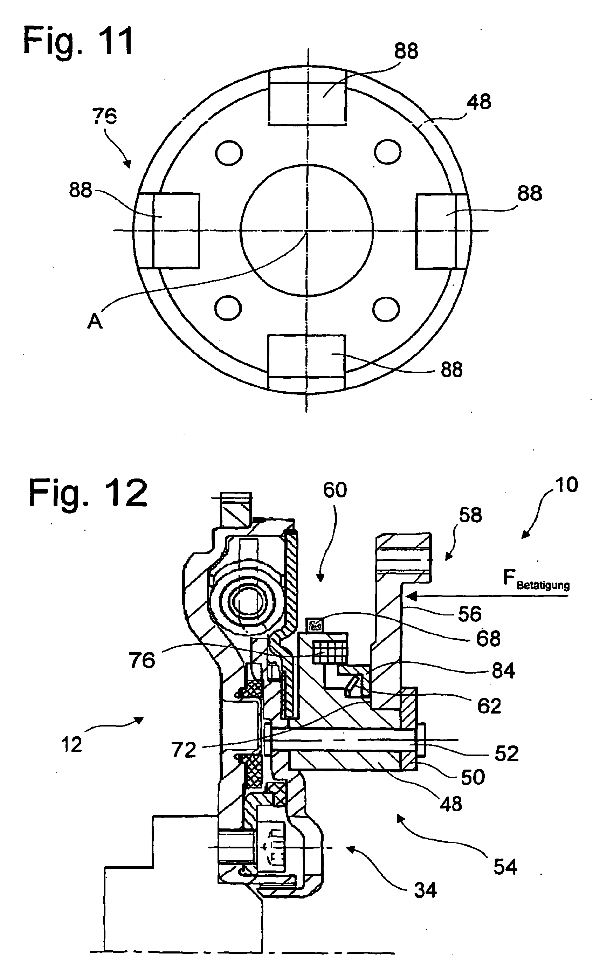

Bei der in Fig. 10 gezeigten Ausgestaltungsform ist die Elektromagnetanordnung am Außenumfangsbereich des Nabenelements 48 vorgesehen. Hierzu erkennt man beispielsweise in Fig. 11, dass über den Außenumfang des Nabenelements 48 verteilt mehrere Spulenanordnungen der Elektromagnetanordnung 76 vorgesehen sein können. Diese sind, wie in Fig. 10 wiederum erkennbar, dann radial außen von dem zweiten Bereich 58, also der Schwungmasse 56, umgeben. Das Kraftbeaufschlagungselement 62 stützt sich am Widerlager 50 ab und presst über einen Druckring 90 einen aus dielektrischem Material aufgebauten Reibring 92 gegen die Schwungmasse 56 und damit diese gegen den Radialvorsprung 82 des Nabenelements 48. Bei Erregung der Elektromagnetanordnung 76 wird eine Kraftwechselwirkung mit dem Reibring 92 erzeugt, die diesen in axialer Richtung, und zwar beispielsweise in Richtung von der Schwungmasse 56 weg, beaufschlagt und somit eine Minderung der Krafteinwirkung des Kraftbeaufschlagungselements 62 auf den zweiten Bereich 58 nach sich zieht. Auch hier kann also durch entsprechende Erregung der Elektromagnetanordnung 76 gezielt das Rutschmoment eingestellt werden, wobei auch hier selbstverständlich in oszillierender Art und Weise gearbeitet werden kann.

Die Fig. 12 zeigt eine Ausgestaltungsvariante, bei welcher das Kraftbeaufschlagungselement 62 wiederum über einen mit L-förmiger Winkelkontur ausgestalteten Druckring den zweiten Bereich 58 gegen den Widerlagerring 50 presst. Der im Wesentlichen axial sich erstreckende L-Bereich des Druckrings 84 ragt in den von der Elektromagnetanordnung 76 umgebenen Volumenbereich. Eine Erregung der Elektromagnetanordnung 76 hat eine entsprechende axiale Beaufschlagung des Druckrings 84 zur Folge, so dass dieser entgegen der Krafteinwirkung des Krafterzeugungselements 82 die Tendenz hat, sich in Richtung vom zweiten Bereich 58 weg zu bewegen und somit das Rutschmoment zu mindern. Der Druckring 84 kann aus beliebigem ferromagnetischem Material, wie z.B. Stahl u.dgl., bestehen.

Man erkennt bei dieser Ausgestaltungsvariante, dass die Schwungmasse 56 in beiden axialen Richtungen bezüglich des Bereichs 54 abgestützt ist. In einer Richtung erfolgt dies über den Widerlagerring 50, in der anderen über den Radialvorsprung 72. Je nachdem, ob der Einsatz bei einer gedrückten Kupplung erfolgt, also einer Kupplung, bei welcher die Betätigungskraft in Richtung des eingezeichneten Kraftpfeils erfolgt, oder der Einsatz bei einer gezogenen Kupplung vorgesehen ist, also eine Betätigungskraft in entgegengesetzter Richtung eingeleitet wird, wird die Abstützung des zweiten Bereichs 58 bezüglich des ersten Bereichs 54 dann am Radialvorsprung 72 oder am Widerlagerring 50 erfolgen. In jedem Falle liefert aber die Kupptungsbetätigungskraft durch die dann erfolgte verstärkte Anlage der Schwungmasse 56 an dem ersten Bereich 54 einen Beitrag zur Kupplungskraft bzw. der das Rutschmoment erzeugenden Kraft.

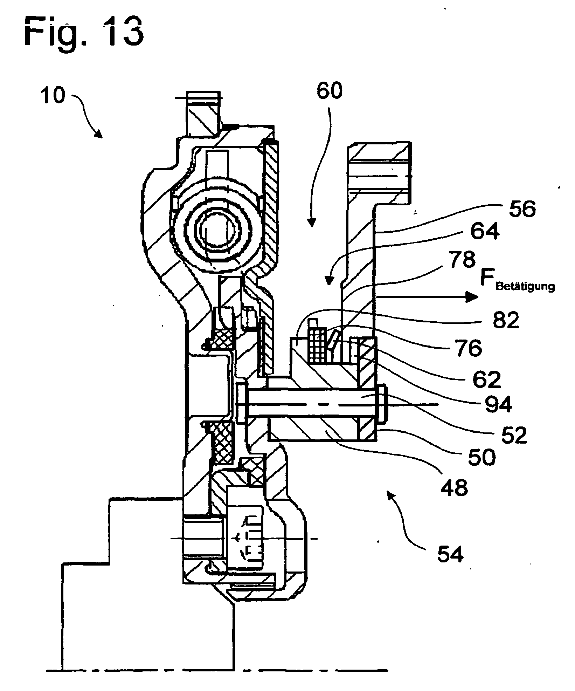

Eine weitere Ausgestaltungsform ist in Fig. 13 gezeigt. Hier ist grundsätzlich wieder vorgesehen, dass die Schwungmasse 56 durch die Krafteinwirkung des Krafterzeugungselements 62 in Richtung auf den Widerlagerring 50 zu vorgespannt ist. Hier ist aber kein direkter axialer Anlagekontakt oder zumindest kein in Umfangsrichtung vollständig durchgehender direkter Anlagekontakt zwischen der Schwungmasse 56 und dem Widerlagerring 50 vorgesehen. Vielmehr ist eine oder sind mehrere in Umfangsrichtung aufeinander folgende Kammern 94 vorgesehen, die mit einer magnetorheologischen Flüssigkeit gefüllt sind. Diese magnetorheologische Flüssigkeit überträgt ebenfalls Kräfte zwischen der Schwungmasse 56 und dem Widerlager 50. Durch Erregung der Elektromagnetanordnung 76 und das dabei erzeugte Magnetfeld wird die Viskosität dieser magnetorheologischen Flüssigkeit geändert. Eine Änderung der Viskosität wiederum verändert die über diese Flüssigkeit übertragbaren Scherkräfte und somit das zwischen der Schwungmasse 56 und dem Widerlagerring 50 übertragbare Drehmoment, d.h. das Rutschmoment. Bei dieser Ausgestaltungsform ist die Schwungmasse 56 an derjenigen Seite bzw. in demjenigen Bereich, in welchem sie durch das Krafterzeugungselement 62 beaufschlagt ist, durch ein dielektrisches Material 78 isoliert. Auch zwischen der Elektromagnetanordnung 76 und dem Kraftbeaufschlagungselement 62 kann eine derartige dielektrische Isolation vorgesehen sein.

In Fig. 12 ist eine Variante gezeigt, bei welcher die Schwungmasse 56 zur Aufnahme der Reaktionskräfte bei Kupplungsbetätigung wieder am Radialvorsprung 82 abgestützt ist. Das Nabenelement 48 kann, ähnlich wie bei der Ausgestaltungsform gemäß den Fig. 10 und 11, an seinem Außenbereich mit einer oder mehreren Spulenanordnungen 88 der Elektromagnetanordnung 76 versehen sein. Durch ein axial an das Nabenelement 48 anschließendes und mit diesem fest verbundenes Abschlusselement 96 und den radial inneren Bereich der Schwungmasse 56 ist wieder eine Kammer 94 begrenzt, und es sind in mehreren Umfangsrichtungen aufeinander folgende Kammern 94 vorgesehen, in welchen eine magnetorheologische Flüssigkeit beispielsweise unter Druck aufgenommen ist. Diese magnetorheologische Flüssigkeit übernimmt hier den wesentlichen Beitrag zur Drehmomentübertragung, wobei selbstverständlich auch eine axiale Einspannung der Schwungmasse 56 zwischen dem Radialvorsprung 82 und dem Abschlusselement 96 und die dabei erzeugte Reibwirkung bereits ein gewisses Grund-Rutschmoment erzeugen kann. Durch Erregung der Elektromagnetanordnung 76 und das dabei erzeugte Magnetfeld kann wieder, gewünschtenfalls periodisch, die Viskosität der magnetorheologischen Flüssigkeit beeinflusst werden und damit auch deren Vermögen, Scherkräfte und somit Drehmomente zu übertragen. Man erkennt also, dass hier kein Krafterzeugungselement vorhanden ist, dessen Einspannwirkung oder Krafterzeugungsvermögen durch Aktivierung der Aktuatoranordnung 64 durch Viskositätsänderung und entsprechende Scherkraftänderung das Rutschmoment zu beeinflussen.

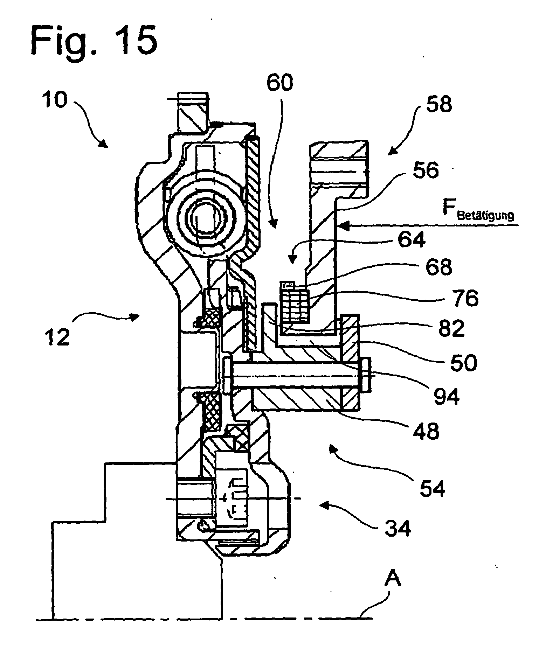

Bei der in Fig. 15 gezeigten Ausgestaltungsvariante ist nunmehr die Aktuatoranordnung 64 nicht am ersten Bereich 54, sondern am zweiten Bereich 58, nämlich der Schwungmasse 56, getragen. Die Aktuatoranordnung umfasst beispielsweise wieder eine Elektromagnetanordnung 76 mit einer oder mehreren Spulen bzw. Wicklungen, die über den Schleifring 68 elektrisch kontaktiert werden. Der radial innere Bereich der Schwungmasse 56 ist axial zwischen dem Radialvorsprung 82 und dem Widerlagerring 50, der hier tatsächlich keine wesentliche Widerlagerfunktion übernimmt, angeordnet, so dass wiederum eine oder mehrere Kammern 94 durch das Nabenelement 48, den Widerlagerring 50 und die Schwungmasse 56 begrenzt sind. Auch in dieser Kammer oder in diesen Kammern 94 ist wieder eine magnetorheologische Flüssigkeit enthalten, die bei entsprechender Erregung der Elektromagnetanordnung 76 und Erzeugung eines Magnetfelds ihre Viskosität und damit ihr Vermögen, ein Drehmoment zu übertragen, verändert. Es ist selbstverständlich, dass zwischen dem radial inneren Bereich der Schwungmasse 56 und dem Radialvorsprung 82 bzw. dem Widerlagerring 50 ein direkter oder vermittels von Dichtungselementen realisierter Anlagekontakt besteht, um das Austreten der magnetorheologischen Flüssigkeit zu verhindern. Durch diesen Anlagekontakt kann gewünschtenfalls bereits ein gewisses Grundreibmoment und somit ein gewisses Grund-Rutschkupplungsmoment bereitgestellt werden.

Vorangehend sind verschiedene Ausgetaltungsformen von Torsionsschwingungsdämpfem beschrieben worden, bei welchen die Möglichkeit geschaffen ist, durch aktives Beeinflussen des Rutschmoments einer im Bereich der Sekundärseite angeordneten Rutschkupplung das Drehmomentübertragungsvermögen des Torsionsschwingungsdämpfers selbst und insbesondere auch das Schwingungsdämpfungsvermögen desselben zu beeinflussen. Je nachdem, ob eine möglichst starke oder eine möglichst geringe Kopplung zwischen dem Eingangsbereich und dem Ausgangsbereich des Torsionsschwingungsdämpfers gewünscht ist, kann das Kupplungsmoment entsprechend angepasst werden.

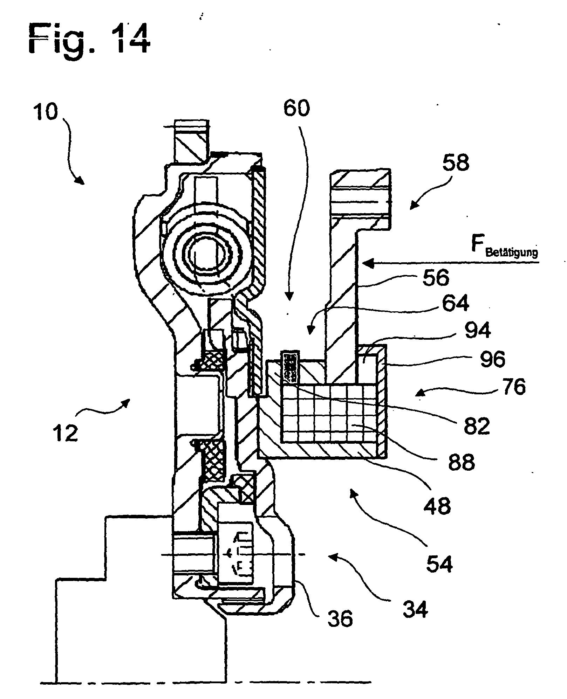

Es sei abschließend darauf hingewiesen, dass selbstverständlich die verschiedenen vorangehend dargestellten Konzepte miteinander verschmolzen werden können, so dass eine Krafterzeugung bzw. Kraftänderung durch Zusammenwirkung beispielsweise einer elektromagnetischen und einer piezoelektrischen Aktuatoranordnung generiert werden kann. Auch ist es selbstverständlich möglich, eine elektrorheologische Flüssigkeit bei den Ausgestaltungsformen gemäß den Fig. 13 - 15 einzusetzen, wobei dann eben ein elektisches Feld zur entsprechenden Viskositätsänderung zu erzeugen ist.

Weiter sei drauf hingewiesen, dass durch Variation des Verhältnisses der Masse bzw. des Massenträgheitsmomentes der beiden Bereiche 54 und 58 der Sekundärseite 34 die Dämpfungscharakteristik, die durch die Rutschkupplungsanordnung 60 zusätzlich mit eingeführt wird, beeinflusst werden kann. Je kleiner der Anteil der Masse bzw. des Massenträgheitsmoments des ersten Bereichs 54 an der Sekundärseite 34 ist, desto stärker wird die Rutschkupplung 60 dann zum Vermeiden von Schwingungsüberhöhungen beim Durchlaufen der Resonanz wirksam sein können. Je größer der Massenanteil des ersten Bereichs ist, desto stärker wird die Rutschkupplung aktiv sein können, um in verschiedenen Betriebsbereichen dann eine verbesserte Entkopplung zwischen dem Eingang des Torsionsschwingungsdämpfers 10 und dem Ausgang desselben bereitzustellen.

Abschließend sei darauf hingewiesen, dass auch im Bereich der Primärseite 12 oder nur im Bereich der Primärseite 12 eine derartige Unterteilung in zwei Bereiche mit Vorsehen einer Rutschkupplung, insbesondere auch einer ansteuerbaren Rutschkupplung realisiert sein kann. Sowohl bei der Primärseite als auch der Sekundärseite ist es grundsätzlich denkbar, die Rutschkupplung mit fester und nicht durch irgendwelche Ansteuerungsmaßnahmen beeinflussbarer Rutschmomentencharakteristik auszugestalten, beispielsweise dann, wenn definiert nur ein bestimmter Bereich ins Auge gefasst ist, in dem eine zusätzliche Dämpfung bereitgestellt werden soll, beispielsweise das Durchlaufen des Resonanzfrequenzbereichs.

## Patentansprüche

1. Torsionsschwingungsdämpfer, umfassend eine Primärseite (12) und eine bezüglich der Primärseite (12) gegen die Wirkung einer Dämpferelementenanordnung (32) um eine Drehachse (A) drehbare Sekundärseite (34), wobei die Primärseite (12) oder/und die Sekundärseite (34) in zwei durch eine Rutschkupplungsanordnung (60) miteinander gekoppelte Bereiche (54, 58) unterteilt ist
**dadurch gekennzeichnet, dass** die Rutschkupplungsanordnung (60) eine Aktuatoranordnung (64) und dieser zugeordnet eine Ansteueranordnung aufweist, durch welche die Aktuatoranordnung (64) zum Verändern des Rutschmoments der Rutschkupplungsanordnung (60) ansteuerbar ist.

2. Torsionsschwingungsdämpfer nach Anspruch 1,
**dadurch gekennzeichnet, dass** die Sekundärseite (34) einen ersten Bereich (54) und einen zweiten Bereich (58) aufweist, die über eine Rutschkupplungsanordnung (60) miteinander gekoppelt sind, wobei der erste Bereich (54) zur Zusammenwirkung mit der Dämpferelementenanordnung (32) ausgebildet ist.

3. Torsionsschwingungsdämpfer nach Anspruch 2,
**dadurch gekennzeichnet, dass** die Masse oder/und das Massenträgheitsmoment des ersten Bereichs (54) wenigstens die Hälfte der Masse oder/und des Massenträgheitsmoments des zweiten Bereichs (58) beträgt.

4. Torsionsschwingungsdämpfer nach Anspruch 2,
**dadurch gekennzeichnet, dass** die Masse oder/und das Massenträgheitsmoment des ersten Bereichs (54) weniger als die Hälfte der Masse oder/und des Massenträgheitsmoments des zweiten Bereichs (58) beträgt.

5. Torsionsschwingungsdämpfer nach Anspruch 1,
**dadurch gekennzeichnet, dass** die Rutschkupplungsanordnung (60) ein Krafterzeugungselement (62) zur Bereitstellung einer Kupplungskraft aufweist, und dass durch die Aktuatoranordnung (64) die durch das Krafterzeugungselement (62) bereitgestellte Kupplungskraft veränder bar ist.

6. Torsionsschwingungsdämpfer nach Anspruch 5,
**dadurch gekennzeichnet, dass** das Krafterzeugungselement (62) bezüglich einem der beiden Bereiche (54, 58) abgestützt ist und den anderen Bereich in einer Beaufschlagungsrichtung gegen ein Widerlager (50; 72) presst, das an dem einen der Bereiche (54, 58)getragen ist.

7. Torsionsschwingungsdämpfer nach Anspruch 6,
**dadurch gekennzeichnet, dass** die Beaufschlagungsrichtung im Wesentlichen einer Betätigungskraftrichtung entspricht, in welcher eine mit der Sekundärseite (34) zu koppelnde Reibungskupplung zur Durchführung von Betätigungsvorgängen zu beaufschlagen ist.

8. Torsionsschwingungsdämpfer nach einem der Ansprüche 5 bis 7,
**dadurch gekennzeichnet, dass** das Krafterzeugungselement (62) eine unter Vorspannung gehaltene Feder umfasst und dass durch die Aktuatoranordnung (64) die Vorspannung des Krafterzeugungselements (62) veränderbar ist.

9. Torsionsschwingungsdämpfer nach Anspruch 8,
**dadurch gekennzeichnet, dass** die Aktuatoranordnung (64) durch die Ansteueranordnung so ansteuerbar ist, dass diese auf das Krafterzeugungselement (62) zum periodischen Verändern der Vorspannung desselben einwirkt.

10. Torsionsschwingungsdämpfer nach einem der Ansprüche 5 bis 9,
**dadurch gekennzeichnet, dass** die Aktuatoranordnung (64) eine Elektromagnetanordnung (76) umfasst, welche zum Erzeugen einer die Beaufschlagungswirkung des Krafterzeugungselements (62) beeinflussenden Magnetkraft ansteuerbar ist.

11. Torsionsschwingungsdämpfer nach einem der Ansprüche 5 bis 9,
**dadurch gekennzeichnet, dass** die Aktuatoranordnung (64) eine Piezoelementenanordnung umfasst, welche zum Beeinflussen der Beaufschlagungswirkung des Krafterzeugungselements (62) ansteuerbar ist.

12. Torsionsschwingungsdämpfer nach Anspruch 1 oder einem der Ansprüche 5 bis 9,
**dadurch gekennzeichnet, dass** die Aktuatoranordnung (64) eine magnetorheologische Flüssigkeit oder/und elektrorheologische Flüssigkeit umfasst, deren Viskosität durch Ansteuern veränderbar ist, um das Rutschmoment der Rutschkupplungsanordnung (60) zu beeinflussen.

## Claims

1. Torsional vibration damper, comprising a primary side (12) and a secondary side (34) which is rotatable about a rotational axis (A) relative to the primary side (12) counter to the action of a damper element arrangement (32), with the primary side (12) or/and the secondary side (34) being divided into two regions (54, 58) which are coupled to one another by means of a slipping clutch arrangement (60),
**characterized in that** the slipping clutch arrangement (60) has an actuator arrangement (64) and, assigned to this, an activating arrangement, by means of which the actuator arrangement (64) can be activated in order to vary the slipping torque of the slipping clutch arrangement (60).

2. Torsional vibration damper according to Claim 1,
**characterized in that** the secondary side (34) has a first region (54) and a second region (58) which are coupled to one another by means of a slipping clutch arrangement (60), with the first region (54) being designed to interact with the damper element arrangement (32).

3. Torsional vibration damper according to Claim 2,
**characterized in that** the mass or/and the mass moment of inertia of the first region (54) is at least half of the mass or/and the mass moment of inertia of the second region (58).

4. Torsional vibration damper according to Claim 2,
**characterized in that** the mass or/and the mass moment of inertia of the first region (54) is less than half of the mass or/and the mass moment of inertia of the second region (58).

5. Torsional vibration damper according to Claim 1,
**characterized in that** the slipping clutch arrangement (60) has a force-generating element (62) for providing a coupling force, and **in that** the coupling force provided by the force-generating element (62) can be varied by means of the actuator arrangement (64).

6. Torsional vibration damper according to Claim 5,
**characterized in that** the force-generating element (62) is supported relative to one of the two regions (54, 58) and presses the other region in a loading direction against an abutment (50; 72) which is carried on the one of the regions (54, 58).

7. Torsional vibration damper according to Claim 6,
**characterized in that** the loading direction substantially corresponds to an actuating force direction in which a friction clutch, which is to be coupled to the secondary side (34), is to be acted on in order to carry out actuating processes.

8. Torsional vibration damper according to one of Claims 5 to 7,
**characterized in that** the force-generating element (62) comprises a spring which is held under preload, and **in that** the preload of the force-generating element (62) can be varied by means of the actuator arrangement (64).

9. Torsional vibration damper according to Claim 8,
**characterized in that** the actuator arrangement (64) can be activated by the activating arrangement in such a way that said actuator arrangement (64) acts on the force-generating element (62) so as to periodically vary the preload of the latter.

10. Torsional vibration damper according to one of Claims 5 to 9,
**characterized in that** the actuator arrangement (64) comprises an electromagnet arrangement (76) which can be activated so as to generate a magnetic force which influences the loading action of the force-generating element (62).

11. Torsional vibration damper according to one of Claims 5 to 9,
**characterized in that** the actuator arrangement (64) comprises a piezoelectric element arrangement which can be activated so as to influence the loading action of the force-generating element (62).

12. Torsional vibration damper according to Claim 1 or one of Claims 5 to 9,
**characterized in that** the actuator arrangement (64) comprises a magnetorheological liquid or/and electrorheological liquid, whose viscosity can be varied by activation in order to influence the slipping torque of the slipping clutch arrangement (60).

## Revendications

1. Amortisseur de vibrations de torsion, comprenant un côté primaire (12) et un côté secondaire (34) rotatif autour d'un axe de rotation (A) par rapport au côté primaire (12) contre l'action d'un ensemble (32) d'éléments amortisseurs, sachant que le côté primaire (12) et/ou le côté secondaire (34) est divisé en deux régions (54, 58) couplées entre elles par un ensemble (60) d'accouplement à glissement,
**caractérisé en ce que** l'ensemble (60) d'accouplement à glissement présente un ensemble d'actionneur (64) et un ensemble d'asservissement qui est associé à ce dernier et par lequel l'ensemble d'actionneur (64) peut être asservi pour modifier le couple de glissement de l'ensemble (60) d'accouplement à glissement.

2. Amortisseur de vibrations de torsion selon la revendication 1, **caractérisé en ce que** le côté secondaire (34) présente une première région (54) et une deuxième région (58) qui sont couplées entre elles via un ensemble (60) d'accouplement à glissement, la première région (54) étant conçue pour coopérer avec l'ensemble (32) d'éléments amortisseurs.

3. Amortisseur de vibrations de torsion selon la revendication 2, **caractérisé en ce que** la masse et/ou le moment d'énergie de masse de la première région (54) est égal(e) à au moins la moitié de la masse et/ou du moment d'énergie de masse de la deuxième région (58).

4. Amortisseur de vibrations de torsion selon la revendication 2, **caractérisé en ce que** la masse et/ou le moment d'énergie de masse de la première région (54) est égal(e) à moins de la moitié de la masse et/ou du moment d'énergie de masse de la deuxième région (58).

5. Amortisseur de vibrations de torsion selon la revendication 1, **caractérisé en ce que** l'ensemble (60) d'accouplement à glissement présente un élément (62) de production de force pour fournir une force d'accouplement, et **en ce que** la force d'accouplement fournie par l'élément (62) de production de force peut être modifiée par l'ensemble d'actionneur (64).

6. Amortisseur de vibrations de torsion selon la revendication 5, **caractérisé en ce que** l'élément (62) de production de force est soutenu par rapport à une des deux régions (54, 58) et presse l'autre région dans une direction de sollicitation contre un élément (50 ; 72) de contre-appui qui est porté sur la première des régions (54, 58).

7. Amortisseur de vibrations de torsion selon la revendication 6, **caractérisé en ce que** la direction de sollicitation correspond pour l'essentiel à une direction de force d'actionnement dans laquelle un embrayage à friction à accoupler au côté secondaire (34) doit être sollicité pour exécuter des processus d'actionnement.

8. Amortisseur de vibrations de torsion selon l'une quelconque des revendications 5 à 7, **caractérisé en ce que** l'élément (62) de production de force comprend un ressort maintenu sous précontrainte, et **en ce que** la précontrainte de l'élément (62) de production de force peut être modifiée par l'ensemble d'actionneur (64).

9. Amortisseur de vibrations de torsion selon la revendication 8, **caractérisé en ce que** l'ensemble d'actionneur (64) peut être asservi par l'ensemble d'asservissement de telle sorte que ce dernier agit sur l'élément (62) de production de force pour modifier périodiquement la précontrainte.

10. Amortisseur de vibrations de torsion selon l'une quelconque des revendications 5 à 9, **caractérisé en ce que** l'ensemble d'actionneur (64) comprend un ensemble (76) d'électroaimant qui peut être asservi pour produire une force magnétique influant sur l'effet de sollicitation de l'élément (62) de production de force.

11. Amortisseur de vibrations de torsion selon l'une quelconque des revendications 5 à 9, **caractérisé en ce que** l'ensemble d'actionneur (64) comprend un ensemble d'éléments piézoélectriques qui peut être asservi pour influer sur l'effet de sollicitation de l'élément (62) de production de force.

12. Amortisseur de vibrations de torsion selon la revendication 1 ou l'une quelconque des revendications 5 à 9, **caractérisé en ce que** l'ensemble d'actionneur (64) comprend un liquide magnéto-rhéologique et/ou un liquide électro-rhéologique, dont la viscosité peut être modifiée par asservissement pour influer sur le couple de glissement de l'ensemble (60) d'accouplement à glissement.
